# Europäisches Patentamt

## European Patent Office

## Office européen des brevets

(11) Publication number: **0 114 288**
**B1**

(12) **EUROPEAN PATENT SPECIFICATION**

(45) Date of publication of patent specification: **04.10.89**

(21) Application number: **83112463.1**

(22) Date of filing: **10.12.83**

(51) Int. Cl.⁴: **C 08 J 3/22, C 08 K 5/00, C 08 L 67/02, C 08 L 69/00, C 08 L 51/04**

(54) Additive concentrate for polyester compositions and method of addition.

(30) Priority: **28.12.82 US 454018**

(43) Date of publication of application:
**01.08.84 Bulletin 84/31**

(45) Publication of the grant of the patent:
**04.10.89 Bulletin 89/40**

(84) Designated Contracting States:
**DE FR GB IT NL**

(56) References cited:
**EP-A-0 079 477**
**US-A-3 864 428**

(73) Proprietor: **GENERAL ELECTRIC COMPANY**
**1 River Road**
**Schenectady New York 12305 (US)**

(72) Inventor: **Agarwal, Surendra Hukamchand**
**1506 S.E. 2nd Street**
**Evansville Indiana 47713 (US)**

(74) Representative: **Sieb, Rolf, Dr. et al**
**General Electric - Deutschland Patentabteilung**
**Praunheimer Landstrasse 50**
**D-6000 Frankfurt/Main (DE)**

**Description**

Background of the invention

High molecular weight linear polyesters and copolyesters of glycols and terephthalic or isophthalic acid have been available for a number of years. These are described, inter alia, in U.S.—A—2,465,319 and in U.S.—A—3,047,539. These patents disclose that the polyesters are particularly advantageous as film and fiber formers.

With the development of molecular weight control, the use of nucleating agents and two-step molding cycles, poly(ethylene terephthalate) has become an important constituent of injection moldable compositions. Poly(1,4-butylene terephthalate), because of its very rapid crystallization from the melt, is uniquely useful as a component in molding resins. Work-pieces molded from such polyester resins, alone or combined with reinforcements, in comparison with other thermoplastics, offer a high degree of surface hardness and abrasion resistance, high gloss, and lower surface friction.

Stable polyblends of poly(1,4-butylene terephthalate) and poly(ethylene terephthalate) can be molded into useful unreinforced and reinforced articles. See U.S.—A—3,953,394.

Block copolyesters containing units derived from poly(1,4-butylene terephthalate) and from an aromatic aliphatic or aliphatic polyester are also known. See GB—A—1 569 229. Such block copolyesters are useful per se as molding resins and also in intimate combination with poly(1,4-butylene terephthalate) and/or poly(ethylene terephthalate).

It has been proposed to increase the impact strengths of polyesters by adding various modifiers. For example, U.S.—A—3,591,659 discloses that a useful family of modifiers comprises polyalkyl acrylates, methacrylates and/or ethacrylates. U.S.—A—4,044,073 discloses that a useful impact modifier for such polyesters is an aromatic polycarbonate. U.S.—A—4,022,748 discloses that a rubber-elastic graft copolymer having a glass temperature below −20°C. is a useful modifier. U.S.—A—4,034,013, and U.S.—A—4,096,202 disclose that useful impact modifiers comprise multiple stage polymers having a rubbery first stage and a hard final stage, preferably including units derived from alkyl acrylates, especially butyl acrylates. U.S.—A—4,034,016 (corresp. DE—A—2,650,870) discloses an impact modifier combination comprising a blend of a polyurethane and an aromatic polycarbonate. US—A—4,203,887 discloses an impact modifier combination comprising a segmented block copolyester and an aromatic polycarbonate. U.S.—A—4,257,937 discloses an impact modifier combination comprising a blend of a polyalkylacrylate and an aromatic polycarbonate. U.S.—A—4,090,996 discloses an impact modifier combination for poly(1,4-butylene terephthalate) and other polyester resins comprising a selectively hydrogenated monoalkenyl arene-diene block copolymer, and an engineering thermoplastic, e.g., poly(aryl ether), poly(aryl sulfone), polycarbonate, acetal, etc. U.S.—A—3,864,428 discloses poly(butylene terephthalate) alone or combined in blends with other polyesters, impact modified with conjugated diene/vinyl aromatic copolymers grafted with methacrylate monomer and aromatic polycarbonate. U.S.—A—4,180,494 discloses poly(butylene terephthalate), a core shell polymer having a butadiene core and up to 8 percent by weight of an aromatic polycarbonate. U.S.—A—4,280,948 discloses poly(butylene terephthalate) copolyesters impact modified with a combination of an acrylic or methacrylic monomer grafted polymer of a conjugated diene alone or combined with vinyl aromatic and an aromatic polycarbonate resin.

It is also known that acrylic rubbers, methyl methacrylate-butadiene-styrene terpolymers and, in general, finely divided particulate rubbery materials made by emulsion polymerization are more readily dispersed in a polymer matrix such as poly(1,4-butylene terephthalate) if pre-blended, i.e., concentrated, with a polyolefin or co-polyolefin.

More recently, it has been discovered that the addition of an acrylic or methacrylic monomer grafted core shell polymer of more than 50 weight percent of a conjugated diene, alone or in combination with a vinyl monomer, e.g., Rohm & Haas' Acryloid KM 653, and an aromatic polycarbonate, e.g., General Electric Company's LEXAN®, to poly(1,4-butylene terephthalate), e.g., General Electric Company's VALOX®, results in a composition which, when molded into parts, shows good impact strength. While methacrylate-butadiene-styrene copolymers, not of the core-shell type, available from other sources, also give good impact strength at room temperature, e.g., 23°C., only the compositions made from the core shell polymers retain more than 70% of their impact strength at −40°C., making them uniquely suitable for automobile bumpers, ski bindings, and the like, where low-temperature impact resistance is all important. The compositions are described and claimed in EP—A—79 477. As disclosed therein, in preferred embodiments the high temperature performance, and to an extent the low temperature performance, of the compositions is improved by the addition of antioxidants and stabilizers.

Summary of the invention

The discovery has now been made that if antioxidants/stabilizers are precompounded with the acrylic core shell impact modifying polymer to form a concentrate, the concentrate provides better dispersion of the core shell polymer and the antioxidants/stabilizers in the final blend composition.

For ease of discussion, the antioxidants and stabilizers of the aforementioned copending application will be referred to throughout the present disclosure simply as "stabilizers".

This invention essentially involves the pre-blending of the stabilizers and the rubbery core shell polymer under relatively mild conditions of low temperature and low shear. When the resulting concentrate is intimately admixed with the polyester resin, and any other ingredients, at the high processing temperatures normally required to melt the polyester, the stabilizers are already dispersed in the rubbery core shell polymer in relatively high concentration. This results in optimum stabilization of the most temperature sensitive component of the blend composition—the core shell polymer—and concomitantly, significantly improved impact strength in the blends after molding, as will be shown in the accompanying examples. Moreover, the concentrate is easier to handle, eliminates or at least sharply reduces the danger of chemical dust explosions and worker exposure to chemical dust.

The further discovery has been made that the inclusion of a small amount of a homopolymer or copolymer of ethylene before or during admixture of the core shell polymer with stabilizers considerably eases preparation of the concentrate.

Description of the invention

In greater detail, in one aspect of the invention comprises an improvement in the method of preparing a composition, comprising admixing

(a) a thermoplastic polymer selected from the group consisting of: (1) a polyester which is (i) a poly(1,4-butylene terephthalate) resin, or (ii) a block copolyester of poly(1,4-butylene terephthalate) and an aromatic/aliphatic or aliphatic polyester, or (iii) a blend of (i) and a poly(ethylene terephthalate) resin, or (iv) a blend of (ii) and a poly(ethylene terephthalate) resin; (2) an aromatic polycarbonate resin, and (3) a mixture of (1) and (2);

(b) the balance to make 100 parts of (a) and (b) together of an impact modifier thereof comprising an acrylic or methacrylic monomer grafted core shell polymer of a conjugated diene, alone or in combination with a vinyl monomer, the core being polymerized from over 50 weight percent of said diene; and

(c) a stabilizer composition comprising (i) a hindered phenolic antioxidant, (ii) optionally, an aromatic amine, (iii) a thioester, and optionally, (iv) a trivalent phosphorus compound.

The improvement comprises forming a pre-blended concentrate of impact modifier component (b), i.e., the rubbery core shell polymer, and component (c), the stabilizer composition, then admixing it with the other described ingredients of the composition.

In still further detail, the preblend concentrate is prepared by dry blending the components (b) and (c) and extruding or otherwise compounding the components at a relatively low temperature of 93 to 232°C (200 to 450°F), then collecting the compound for addition to the rest of the composition as described above.

In preparing the concentrate, in addition to use of the low temperatures as described, the components are mixed under conditions regulated to provide relatively low shear. The aim is to avoid exposing the core shell resin component to high temperature and/or high shear rates, to prevent the degradation of the rubbery core. The residence time during compounding should also be kept minimum. Prolonged hot roll milling and intensive high shear Banbury mixing are not at all advantageous; short term milling followed by extrusion gives the best results.

In another aspect of the invention, there is provided a preblend concentrate formed in the above-mentioned manner, comprising (1) an intimate admixture of acrylic or methacrylic monomer grafted core shell polymer of a conjugated diene, alone or in combination with a vinyl monomer, the core being polymerized from over 50 weight percent of said diene, and (2) a stabilizer composition of a hindered phenolic antioxidant, optionally, an aromatic amine, a thioester, and, optionally, a trivalent phosphorus compound.

The polyester resins of (a) of this invention are available commercially or can be prepared by known techniques such as transesterification of esters of terephthalic acid with ethylene glycol or butanediol and subsequent polymerization, by heating the glycols with the free acids or with halide derivatives thereof, and similar processes. These are described in U.S.—A—2,465,319 and 3,047,539, and elsewhere. A suitable poly(1,4-butylene terephthalate) as defined under (a) (1) (i) above is available commercially from General Electric Company, Pittsfield, Massachusetts, under the trade designation VALOX® 303.

The block copopyester resin component used in (a) (1) (ii) above can be prepared by the transesterification of (a) straight or branched chain poly(1,4-butylene terephthalate) and (b) a copolyester of a linear aliphatic dicarboxylic acid and, optionally, an aromatic dibasic acid such as terephthalic or isophthalic acid with one or more straight or branched chain dihydric aliphatic glycols. For example, a poly(1,4-butylene terephthalate) can be mixed with a polyester of adipic acid and ethylene glycol, and heated at 235°C. to melt the ingredients, then heated further under a vacuum until the formation of the copolyester is complete. As the second component, there can be substituted poly(neopentyl adipate), poly(1,6-hexylene azelate-co-isophthalate), poly(1,6-hexylene adipate-co-isophthalate) and the like. The procedures and products are described in GB—A—1 569 229.

The poly(ethylene terephthalate) resin component used as part of (a) (1) (iii) and (a) (i) (iv) of the compositions of this invention is available commercially or can be prepared by known techniques such as by the transesterification of esters of terephthalic acid with ethylene glycol with the free acids or with halide derivatives, and similar processes. These are described in U.S.—A—2,465,319 and U.S.—A—3,047,539, and elsewhere.

Illustratively, the high molecular weight polyesters will have an intrinsic viscosity of at least about 0.2 deciliters/gram and, preferably, at least about 0.4 deciliters/gram as measured in a 60:40 phenol/ tetrachloroethane mixture at 30°C., for poly(ethylene terephthalate) and at least 0.6 and more, preferably 0.8 deciliters/gram, same basis, for poly(1,4-butylene terephthalate). Most preferably, for the former, the intrinsic viscosity will be in the range of 0.5 to 1.0 dl./g. and from 0.9 to 1.2 for the latter.

Especially useful when high melt strength is important are branched high melt viscosity poly(1,4-butylene terephthalate) resins, which include a small amount, e.g., up to 5 mole percent based on the terephthalate units, of a branching component containing at least three ester forming groups. The branching component can be one which provides branching in the acid unit portion of the polyester, or in the glycol unit portion, or it can be hybrid. Illustrative of such branching components are tri- or tetracarboxylic acids, such as trimesic acid, pyromellitic acid, and lower alkyl esters thereof, and the like, or preferably, polyols, and especially preferably, tetrols, such as pentaerythritol, triols, such as trimethylolpropane; or dihydroxy carboxylic acids and hydroxydicarboxylic acids and derivatives, such as tartaric acid, and the like.

The branched poly(1,4-butylene terephthalate) resins and their preparation are described in U.S.—A—3,953,404.

Impact modifier (b) comprises an acrylic or methacrylic monomer grafted polymer of a conjugated diene alone or copolymerized with a vinyl aromatic compound. Preferably the core shell polymer comprises units of butadiene, styrene and a $C_1$—$C_6$ alkyl methacrylate. Said alkyl methacrylate is preferably methyl methacrylate.

The graft copolymer resin (b) must be made in such a way to distinguish it from those available commercially from Borg-Warner Corp., under the trade designation BLENDEX, and those available from Kanegafuchi Chemical Industry Co. of Japan, under the trade designation of KANE ACE. Good low temperature impact properties are not obtained even with Rohm & Haas material trade designated Acryloid KM 330. In general, only the core shell polymers of the type available from Rohm & Haas under the trade designation Acryloid KM 653 can be used, especially those containing units derived from butadiene or isoprene, alone or in combination with a vinyl aromatic compound. These are believed to be described in the above-mentioned US—A—4,180,494. Especially preferably, the copolymer component (b) will comprise a three-stage polymer having a butadiene-based rubbery core, a second stage polymerized from styrene, and a final stage, or shell, polymerized from methyl methacrylate, and 1,3-butylene glycol dimethacrylate.

The polycarbonate resins (2) can be made in known ways and they are available commercially from sources, e.g., General Electric Company, Pittsfield, Massachusetts, U.S.A., under the trademark LEXAN®. In general, any of the aromatic polycarbonates described in U.S.—A—4,034,016 can be used, especially those including units derived from bisphenol-A.

In preferred cases, the compositions of this invention will comprise from 30 to 90 parts by weight of component (a) per 100 parts of total weight of the composition; and from 5 to 30 parts by weight of component (b) per 100 parts of the composition.

The stabilizer combination (c) comprises (i) a hindered phenolic antioxidant, (ii) optionally, an aromatic amine, (iii) a thioester, and, optionally (iv) a trivalent phosphorus compound, e.g., a phosphite in amounts from 0.25 to 1.5 parts each of (i), (ii) and (iii) and from 0.5 to 5 parts of (iv) per 100 parts by weight of (a) and (b) together.

Optionally, the compositions can also include (d) fillers and/or reinforcing agents. Special mention is made of fibrous (filamentous) glass, which when present is generally included in amounts of up to about 60% and more, usually up to about 40% by weight of (a) and (b) combined. However, any filler, e.g., mineral filler such as talc, mica, clay, or fibrous reinforcement, can be used in these amounts.

Other ingredients, such as dyes, pigments, drip retardants, flame retardants, and the like can be added in conventional amounts for their conventionally employed purposes.

As explained previously, the concentrate is admixed with the other ingredients of the final composition. This can be done in one convenient manner by tumbling the concentrate and other components to form a dry blend, extruding the blend at a temperature between 232 to 288°C (450 to 550°F.), cooling the extrudate, forming it into pellets and injection molding at a temperature of 232 to 288°C (450 to 550°F.) (10 to 121°C (50 to 250°F.) mold temperature).

The molded compositions are useful for a variety of purposes where performance at below normal and/or above normal temperatures is desired, for example, automobile bumpers, ski bindings, and the like.

Description of the specific embodiments

The following examples illustrate the invention. They are set forth as a further designation only and are not to be construed as a limitation on the scope of the invention.

Examples 1—4

Dry blends of poly(1,4-butylene terephthalate) resin, aromatic polycarbonate of bisphenol-A and a concentrate of polybutadiene-styrene-methyl methacrylate core shell polymer and stabilizers were compounded and extruded at 266°C. melt temperature in an extruder. For comparison purposes, all of the ingredients were admixed together directly, without prior formation of the concentrate. The extrudates were pelletized and injection molded at 238°C. (mold temperature 66°C.). The formulations and physical properties are shown in Table 1.

TABLE 1

| Example | Not pre-concentrated | | Pre-concentrated | |
|---|---|---|---|---|
| | 1 | 2 | 3 | 4 |
| Composition (parts by weight) Poly(1,4-butylene terephthalate)[a] | 65 | 67.45 | 65 | 67 |
| Aromatic polycarbonate[b] | 15 | 15 | 15 | 15 |
| S/B/MMA core shell polymer[c] | 15 | 15 | — | — |
| Concentrate[1] | — | — | 19.5 | — |
| Concentrate[2] | — | — | — | 16.5 |
| Thioester[d] | 2.0 | 0.7 | 2.0 | .19 |
| Hindered phenolic antioxidant[e] | 0.5 | 0.35 | 0.5 | .10 |
| Aromatic amine stabilizer[f] | 0.5 | — | 0.5 | — |
| Aromatic phosphite[g] | 0.5 | — | 0.5 | — |
| Polyethylene processing aid[h] | 1.5 | 1.5 | 1.5 | 1.5 |
| Properties Notched Izod impact strength, Nm/cm (ft.lbs./in.) at 25°C. (room temp.) | 9,18 (17.0) | 9,83 (18.2) | 8,75 (16.2) | 9,83 (18.2) |
| at −30°C. | 8,96 (16.6) | 3,78 (7.0) | 9,18 (17.0) | 9,83 (18.2) |

[1] 100 parts KM-653, 13.3 parts Seenox 412S, 3.3 parts Topanol CA and 3.3 parts Naugard 445 and 10 parts Microthene (FN 510)
[2] 100 parts KM-653, 1.14 parts Seenox 412S, 0.6 parts Topanol CA
[a] VALOX® 315, General Electric Company
[b] LEXAN® 134, General Electric Company
[c] Acryloid KM 653, Rohm & Haas Chemical Company
[d] Seenox 412S, Argus
[e] Topanol CA, ICI Americas
[f] Naugard 445, Uniroyal
[g] Naugard PHR, Uniroyal
[h] Microthene (FN 510)

A comparison of test data for control Examples 1 and 2 with the data for pre-blend concentrate Examples 3 and 4 shows that pre-concentration enables one to incorporate into the compositions markedly less stabilizer without adversely affecting low temperature impact strength. These Examples also establish that, without pre-concentration, reducing the stabilizer content has an adverse effect upon low temperature impact strength.

Examples 5—13
Again in accordance with the invention, dry blends of poly(1,4-butylene terephthalate), aromatic polycarbonate, filler/reinforcement and concentrate of S/B/MMA and stabilizers were prepared and extruded through a single screw extruder at 260—288°C. Parts were molded and tested. The formulations and test results are given in Table 2.

TABLE 2

| Example | 5 | 6 | 7 | 8 | 9 | 10 | 11 | 12 | 13 |
|---|---|---|---|---|---|---|---|---|---|
| **Composition (parts by weight)** | | | | | | | | | |
| Poly(1,4-butylene terephthalate)[a] | 65 | 60 | 30 | 60 | 55 | 60 | 55 | 45 | — |
| Aromatic polycarbonate[i] | 15 | 15 | 15 | 15 | 15 | 15 | 15 | 15 | 90 |
| Concentrate[(1)]* | 18 | 18 | 18 | 18 | 18 | 18 | 18 | 18 | 10 |
| Polyethylene[h] | 1.5 | 1.5 | 1.5 | 1.5 | 1.5 | 1.5 | 1.5 | 1.5 | — |
| Aromatic phosphite[g] | 0.5 | 0.5 | 0.5 | 0.5 | 0.5 | 0.5 | 0.5 | 0.5 | 0.5 |
| Glass filaments | — | 5 | — | — | — | — | — | — | — |
| Clay | — | — | — | 5 | 10 | — | — | — | — |
| Mica | — | — | — | — | — | 5 | 10 | — | — |
| Poly(ethylene terephthalate) | — | — | 35 | — | — | — | — | 20 | — |
| **Properties** | | | | | | | | | |
| Notched Izod Impact Strength, Nm/cm (ft.lbs./in.), R.T. | 8,53 (15.8) | 2,43 (4.5) | 7,07 (13.1) | 4,16 (7.7) | 1,84 (3.4) | 2,59 (4.8) | 1,62 (3.0) | 7,61 (14.1) | 8,1 (15) |
| Flexural strength, N/mm$^2$ (psi×10$^{-3}$) | 68,6 (9.8) | 73,5 (10.5) | 68,6 (9.8) | 68,6 (9.8) | 68,6 (9.8) | 67,2 (9.6) | 67,9 (9.7) | 67,2 (9.6) | 92,4 (13.2) |
| Flexural modulus, N/mm$^2$ (psi×10$^{-3}$) | 1834 (262) | 2072 (296) | 1778 (254) | 1918 (274) | 2121 (303) | 2121 (303) | 2562 (366) | 1785 (255) | 2184 (312) |
| Tensile strength, N/mm$^2$ (psi×10$^{-3}$) | 42 (6.0) | 44,8 (6.4) | 43,4 (6.2) | 42,7 (6.1) | 42 (6.0) | 39,9 (5.7) | 39,9 (5.7) | 41,3 (5.9) | 57,4 (8.2) |
| Elongation, % | 161 | 81 | 212 | 143 | 125 | 93 | 18 | 160 | 80 |

\* See Table 1, 100 parts KM 653, 13.3 parts Seenox 412S, 3.3 parts Topenol CA, 3.3 parts Naugard 445.
[a] As in Table 1.
[i] LEXAN® 131, General Electric Company
[h] As in Table 1.
[g] As in Table 1.

It is seen that reinforced materials are obtained from which are produced workpieces with very satisfactory mechanical properties.

Obviously, other modifications and variations of the present invention as claimed are possible in light of the above disclosure. For instance, the stabilizer package can include an amount of a trivalent phosphorus stabilizer. A copolyester of poly(1,4-butylene terephthalate) and a hydroxy-terminated polyester can be substituted for the linear polyester and either can be partially replaced with poly(ethylene terephthalate). All such obvious modifications which may be made in the particular embodiments described above are within the full scope of the invention as defined in the appended claims.

**Claims**

1. An improvement in the method of preparing a thermoplastic composition comprising admixing
(a) a thermoplastic polymer selected from the group consisting of
(1) a polyester resin which is
(i) a poly(1,4-butylene terephthalate) resin, or
(ii) a block copolyester of poly(1,4-butylene terephthalate) and an aromatic/aliphatic or aliphatic polyester, or
(iii) a blend of (i) and a poly(ethylene terephthalate) resin, or
(iv) a blend of (ii) and a poly(ethylene terephthalate) resin;
(2) an aromatic polycarbonate resin; and
(3) mixtures of (1) and (2);
(b) the balance to make 100 parts of (a) and (b) together of an acrylic or methacrylic monomer grafted core shell polymer of butadiene, alone or in combination with a vinyl monomer, the core being polymerized from over 50 weight percent of said diene; and
(c) a stabilizer composition comprising
(i) a hindered phenolic antioxidant,
(ii) optionally, an aromatic amine,
(iii) a thioester, and, optionally,
(iv) a trivalent phosphorus compound, said improvement comprising forming a pre-blend of components (b) and (c) and intimately admixing the pre-blend with component (a).

2. A method according to Claim 1, in which the pre-blend of (b) and (c) is prepared by admixing the two under relatively mild conditions of temperature.

3. A method according to Claim 2, in which the temperature is between 93 and 232°C.

4. A method according to Claim 1, in which the pre-blend of (b) and (c) is co-extruded with (a).

5. A thermoplastic composition made by the method of Claim 1.

6. A composition as defined in Claim 5, wherein the polyester composition (a) comprises from 30 to 90 parts by weight, and impact modifier (b) comprises from 5 to 30 parts by weight, each per 100 parts of the composition.

7. A composition as defined in Claim 5, in which stabilizer component (c) is present in amounts of from 0.25 to 1.5 parts by weight of each of (i), (ii) and (iii) and from 0.5 to 5 parts of (iv) per 100 parts of (a) and (b) combined.

8. A composition as defined in Claim 5, wherein said poly(1,4-butylene terephthalate) in component (a) has an intrinsic viscosity of at least 0.9 deciliters per gram when measured in solution in a 60:40 mixture of phenol and tetrachloroethane at 30°C.

9. A composition as defined in Claim 8, wherein said poly(ethylene terephthalate) in component (a) has an intrinsic viscosity of at least 0.5 deciliters per gram when measured in solution in a 60:40 mixture of phenol and tetrachloroethane at 30°C.

10. A composition as defined in Claim 5, wherein in said component (a) (1) (i) said poly(1,4-butylene terephthalate) resin is linear or branched.

11. A composition as defined in Claim 10, wherein said branched polyester is a high melt viscosity (1,4-butylene terephthalate) resin which includes a small amount of a branching component containing at least three ester forming groups.

12. A composition as defined in Claim 5, wherein in graft core shell polymer component (b) (i), the grafted monomer is a methacrylic monomer.

13. A composition as defined in Claim 12, wherein said core shell polymer comprises units of butadiene, styrene and a $C_1$—$C_6$ alkyl methacrylate.

14. A composition as defined in Claim 13, wherein in said core shell polymer the $C_1$—$C_6$ methacrylate is methyl methacrylate.

15. A composition as made by the method defined in Claim 1, wherein said aromatic polycarbonate resin includes units derived from bisphenol-A.

16. A composition made by the method as defined in Claim 1, which also includes as a filler and/or reinforcing agent (d) glass, mica, talc or clay.

17. An improvement in the method of preparing a thermoplastic composition comprising admixing
(a) an aromatic polycarbonate resin; and
(b) the balance to make 100 parts of (a) and (b) together of an acrylic or methacrylic monomer grafted

## EP 0 114 288 B1

core shell polymer of butadiene, alone or in combination with a vinyl monomer, the core being polymerized from over 50 weight percent of said diene; and

(c) a stabilizer composition comprising
(i) a hindered phenolic antioxidant,
(ii) optionally, an aromatic amine,
(iii) a thioester, and optionally,
(iv) a trivalent phosphorus compound, said improvement comprising forming a preblend of coponents (b) and (c) and intimately admixing the preblend with component (a).

18. A thermoplastic composition made by the process of Claim 17.

19. A method as defined in Claim 1 wherein the preblend of (b) and (c) is prepared by admixing the two in the presence of a small amount of a homopolymer or copolymer of ethylene.

**Patentansprüche**

1. Verbesserung beim Verfahren zum Herstellen einer thermoplastischen Zubereitung, umfassend das Vermischen

(a) eines thermoplastischen Polymers ausgewählt aus der Gruppe bestehend aus
(1) einem Polyesterharz, das
(i) ein Poly(1,4-butylenterephthalat)harz, oder
(ii) ein Blockcopolyester aus Poly(1,4-butylenterephthalat) und einem aromatisch/aliphatischen oder aliphatischen Polyester oder
(iii) eine Mischung von (i) und einem Poly(äthylenterephthalat)harz ist oder
(iv) eine Mischung von (ii) und einem Poly(äthylenterephthalat)harz ist;
(2) einem aromatischen Polycarbonatharz und
(3) Mischungen von (1) und (2);
(b) des Restes, um 100 Teile von (a) und (b) zusammen zu erhalten, von einem mit Acryl- oder Methacrylmonomer gepfropftem Kern-Schale-Polymer von Butadien allein oder in Kombination mit einem Vinylmonomer, wobei der Kern aus mehr als 50 Gew.-% des genannten Diens polymerisiert ist und
(c) einer Stabilisator-Zusammensetzung, umfassend
(i) ein gehindertes phenolisches Antioxidationsmittel,
(ii) gegebenenfalls ein aromatisches Amin,
(iii) einen Thioester und gegebenenfalls
(iv) eine dreiwertige Phosphorverbindung,
wobei die Verbesserung das Bilden einer Vormischung der Komponenten (b) und (c) und das innige Vermischen der Vormischung mit der Komponente (a) umfaßt.

2. Verfahren nach Anspruch 1, worin die Vormischung aus (b) und (c) hergestellt ist durch Vermischen der beiden unter relativ milden Temperaturbedingungen.

3. Verfahren nach Anspruch 2, worin die Temperatur zwischen 93 und 232°C liegt.

4. Verfahren nach Anspruch 1, worin die Vormischung aus (b) und (c) gemeinsam mit (a) stranggepreßt wird.

5. Thermoplastische Zubereitung, hergestellt nach dem Verfahren gemäß Anspruch 1.

6. Zubereitung, wie in Anspruch 5 definiert, worin die Polyesterzusammensetzung (a) von 30 bis 90 Gewichtsteile umfaßt und die die Schlagfestigkeit modifizierende Komponente (b) von 5 bis 30 Gewichtsteile, jeweils auf 100 Teile der Zubereitung, umfaßt.

7. Zubereitung, wie in Anspruch 5 definiert, bei der die Stabilisatorkomponente (c) in Mengen von 0,25 bis 1,5 Gewichtsteilen von jeweils (i), (ii), (iii) und von 0,5 bis 5 Teilen von (iv) auf 100 Teile von (a) und (b) zusammen vorhanden ist.

8. Zubereitung, wie in Anspruch 5 definiert, worin das Poly(1,4-butylenterephthalat) in Komponente (a) eine Grenzviskosität von mindestens 0,9 dl/g hat, gemessen in Lösung in einer 60:40-Mischung von Phenol und Tetrachlorethan bei 30°C.

9. Zubereitung nach Anspruch 8, worin das Poly(äthylenterephthalat) in Komponente (a) eine Grenzviskosität von 0,5 dl/g hat, gemessen in Lösung in einer 60:40-Mischung von Phenol und Tetrachlorethan bei 30°C.

10. Zubereitung, wie in Anspruch 5 definiert, worin in der Komponente (a) (1) (i) das Poly(1,4-butylenterephthalat)harz linear oder verzweigt ist.

11. Zubereitung nach Anspruch 10, worin der verzweigte Polyester ein (1,4-Butylenterephthalat)harz hoher Schmelzviskosität ist, das eine geringe Menge einer verzweigenden Komponente einschließt, die mindestens drei esterbildende Gruppen enthält.

12. Zubereitung, wie in Anspruch 5 definiert, worin in der gepfropften Kern-Schalen-Komponente (b) (i) das aufgepfropfte Monomer ein Methacrylmonomer ist.

13. Zubereitung nach Anspruch 12, worin das Kern-Schale-Polymer Einheiten von Butadien, Styrol und einem $C_1$ bis $C_6$-Alkylmethacrylat umfaßt.

14. Zubereitung nach Anspruch 13, worin in dem Kern-Schale-Polymer das $C_1$ bis $C_6$ Methacrylat Methylmethacrylat ist.

8

15. Zubereitung, hergestellt nach dem in Anspruch 1 definierten Verfahren, worin das aromatisches Polycarbonatharz Einheiten einschließt, die von Bisphenol-A abgeleitet sind.

16. Zubereitung, hergestellt nach dem in Anspruch 1 definierten Verfahren, die auch als Füllstoff und/oder Verstärkungsmittel Glas, Glimmer, Kalk oder Ton enthält.

17. Verbesserung im Verfahren zum Herstellen einer thermoplastischen Masse, umfassend das Vermischen von

(a) einem aromatischen Polycarbonatharz und

(b) dem Rest, um von (a) und (b) zusammen 100 Teile zu erhalten, eines mit Acryl- oder Methacrylmonomer gepfropften Kern-Schale-Polymers von Butadien allein oder in Kombination mit einem Vinylmonomer, wobei der Kern aus mehr als 50 Gew.-% des genannten Diens polymerisiert ist und

(c) einer Stabilisatorzusammensetzung umfassend

(i) ein gehindertes phenolisches Antioxidationsmittel,

(ii) gegebenenfalls ein aromatisches Amin,

(iii) einen Thioester und gegebenenfalls

(iv) eine dreiwertige Phosphorverbindung,

wobei die Verbesserung das Bilden einer Vormischung aus den Komponenten (b) und (c) und das innige Vermischen der Vormischung mit der Komponente (a) umfaßt.

18. Thermoplastische Zubereitung, hergestellt nach dem Verfahren nach Anspruch 17.

19. Verfahren nach Anspruch 1, worin die Vormischung aus (b) und (c) hergestellt wird durch Vermischen der beiden in Gegenwart einer geringen Menge eines Homo- oder Copolymers von Äthylen.

**Revendications**

1. Perfectionnement dans le procédé de préparation d'une composition thermoplastique comprenant le mélange de

(a) un polymère thermoplastique choisi dans le groupe constitué par:

(1) une résine de polyester qui est

(i) une résine de poly(téréphtalate de butylène-1,4) ou

(ii) un copolyester séquencé de poly(téréphtalate de butylène-1,4) et d'un polyester aromatique/ aliphatique ou aliphatique ou

(iii) un mélange de (i) et d'une résine de poly(téréphtalate d'éthylène) ou

(iv) un mélange de (ii) et d'une résine de poly(téréphtalate d'éthylène);

(2) une résine de polycarbonate aromatique et

(3) des mélanges de (1) et de (2);

(b) le complément à 100 parties de l'ensemble de (a) et de (b) d'un polymère à enveloppe et noyau, de butadiène, seul ou en combinaison avec un monomère vinylique à monomère acrylique ou méthacrylique greffé, le noyau étant polymérisé à partir de plus de 50% en poids de ce diène et

(c) une composition stabilisante comprenant

(i) un anti-oxydant phénolique comportant un empêchement stérique,

(ii) facultativement, une amine aromatique,

(iii) un thioester et, facultativement,

(iv) un composé du phosphore trivalent,

ce perfectionnement comprenant la formation d'un prémélange des composants (b) et (c) et le mélange intime du pré-mélange avec le composant (a).

2. Procédé selon la revendication 1, dans lequel on prépare le prémélange de (b) et de (c) en mélangeant ces deux composés dans des conditions de température relativement modérées.

3. Procédé selon la revendication 2, dans lequel la température est comprise entre 93 et 232°C.

4. Procédé selon la revendication 1, dans lequel on co-extrude le prémélange de (b) et de (c) avec (a).

5. Composition thermoplastique préparé selon le procédé de la revendication 1.

6. Composition selon la revendication 5, dans laquelle la composition de polyester (a) représente de 30 à 90 parties en poids et l'agent de modification de la résistance au choc (b) représente de 5 à 30 parties en poids, toujours pour 100 parties en poids de la composition.

7. Composition selon la revendication 5, dans laquelle le composant stabilisant (c) est présent en des quantités comprises entre 0,25 et 1,5 partie en poids de chacun des constituants (1), (ii) et (iii) et entre 0,5 et 5 parties de (iv) pour 100 parties de (a) et de (b) combinés.

8. Composition selon la revendication 5, dans laquelle le poly(téréphtalate de butylène-1,4) du composant (a) présente un indice limite de viscosité d'au moins 0,9 décilitre par gramme lorsqu'on le mesure en solution dans un mélange 60:40 de phénol et de tétrachloroéthane à 30°C.

9. Composition selon la revendication 8, dans laquelle le poly(téréphtalate d'éthylène) du composant (a) présente un indice limite de viscosité d'au moins 0,5 décilitre par gramme lorsqu'on le mesure en solution dans un mélange 60:40 de phénol et de tétrachloroéthane à 30°C.

10. Composition selon la revendication 5, dans laquelle dans le composant (a) (1) (i), la résine de poly(téréphtalate de butylène-1,4) est linéaire ou ramifiée.

11. Composition selon la revendication 10, dans laquelle le polyester ramifié est une résine de (téréphtalate de butylène-1,4) de viscosité de fusion élevée qui comprend une petite quantité d'un composant formant des ramifications contenant au moins trois groupes formant des groupes esters.

12. Composition selon la revendication 5, dans laquelle dans le composant polymère à noyau et enveloppe greffé (b) (i), le monomère greffé est un monomère méthacrylique.

13. Composition selon la revendication 12, dans laquelle le polymère à noyau et enveloppe comprend des motifs de butadiène, de styrène et d'un méthacrylate d'alkyle en $C_1$—$C_6$.

14. Composition selon la revendication 13, dans laquelle dans le polymère à noyau et enveloppe le méthacrylate de radical en $C_1$ à $C_6$ est le méthacrylate de méthyle.

15. Composition préparée par le procédé tel qu'on la défini dans la revendication 1, dans laquelle la résine de polycarbonate aromatique comprend des motifs dérivés du bisphénol-A.

16. Composition préparée par le procédé tel qu'on l'a défini dans la revendication 1, qui comprend également comme charge et/ou agent de renforcement (d) du verre, du mica, du talc ou de l'argile.

17. Perfectionnement dans le procédé de préparation d'un composition thermoplastique comprenant le mélange de

(a) une résine de polycarbonate aromatique et

(b) le complément à 100 parties de l'ensemble de (a) et de (b) d'un polymère à enveloppe et noyau de butadiène, seul ou en combinaison avec un monomère vinylique à monomère acrylique ou méthacrylique grefé, le noyau étant polymérisé à partir de plus de 50% en poids de ce diène et

(c) une composition stabilisante comprenant:

(i) un anti-oxydant phénolique comportant un empêchement stérique,

(ii) facultativement, une amine aromatique,

(iii) un thioester et facultativement,

(iv) un composé du phosphore trivalent, ce perfectionnement comprenant la formation d'un prémélange des composants (b) et (c) et le mélange intime du prémélange avec le composant (a).

18. Composition thermoplastique préparée par le procédé selon la revendication 17.

19. Procédé selon la revendication 1, dans lequel on prépare le prémélange de (b) et de (c) en mélangeant ces deux composants en présence d'une petite quantité d'un homopolymère ou d'un copolymère d'éthylène.